# EUROPEAN PATENT APPLICATION

(11) **EP 1 128 629 A1**
(43) Date of publication of application: **29.08.2001**
(21) Application number: 00610022.6
(22) Date of filing: 22.02.2000
(51) Int. Cl.: H04L 29/06, H04N 1/00

(54) **A method of transmitting digital information from an electronic utility device to a server**

(71) Applicant: TELEFONAKTIEBOLAGET L M ERICSSON (publ), 126 25 Stockholm (SE)
(72) Inventor: Hollström, Magnus, S-222 41 Lund (SE); Hed, Robert, 223 55 Lund (SE); Olsson, Patrik, 217 72 Malmö (SE); Tillgren, Magnus, 214 41 Malmö (SE)
(74) Representative: Boesen, Johnny Peder

(57) **Abstract**

A method of transmitting digital information in a binary format from an electronic utility device (7), such as a digital camera, to a server (6) connected to e.g. the Internet (5), comprises the steps of storing the digital information in the device (7); converting the digital information to a text format; transferring the converted information from the device (7) to a portable telecommunications apparatus (1), such as a mobile telephone, having an information access program for accessing the network (5), e.g. a WAP browser; transferring the information from the portable telecommunications apparatus (1) to the server (6); and converting the digital information from the text format back to a binary format in the server (6). Such a device can be used freely without being dependent on modems and/or access points to the telephone network.

## Description

The invention relates to a method of transmitting an amount of digital information in a binary format from an electronic utility device, such as a digital camera, to a server connected to a global information network, such as the Internet. The invention further relates to an electronic utility device and to a portable digital camera.

Electronic utility devices in which the invention may be utilized can be such devices as satellite navigation modules, video recorders, vending machines, air conditioners or digital cameras, i.e. devices which store status information or other information to which access from the outside is wanted. Digital cameras are known that are able to store captured images as digital information in a built-in memory. Together with associated camera parameters, which are also stored in the camera, these image data may be transferred from the camera to e.g. a PC. The images may then be viewed at the monitor of the PC, or they can be printed out on paper or other material and used as a normal photograph. Some cameras also have a built-in display on which images stored in the camera can be viewed. The data can be transferred from the camera to the PC by loading them onto some type of memory card, such as a PCMCIA card, or the camera may be connected to the PC by a communications link, such as a cable or a wireless link. In this case the camera and the PC must be equipped with corresponding transmitters and receivers. Often configuration data for the camera can be transferred in the opposite direction.

Such a camera is known from WO97/30375. Upon image acquisition by the disclosed camera, the corresponding image data along with related data can be loaded onto a card, which is then removed from the camera and inserted into a PC. The transfer of data can also be done through a cable from a serial port of the camera to a port of the PC. Alternatively, the camera and the PC are equipped with transceivers for modulated radiated signals which can be infrared or other types, such as radio signals. The transceivers at each end may also include modems to cellular telephones or for direct connection to a telephone network. However, the telephones are just used as a part of a communications link between the camera and a specific PC.

Another camera is disclosed in WO99/48276 in which the camera is connected to the Internet. The camera can be set to continuously take pictures of scenes or items of interest and a user can access those pictures at any time. Both the user and the camera are portable, requiring only an Internet connection at any location to implement remote access. The camera is coupled to an external modem, which however may also be implemented within the camera, and the modem is in turn coupled to a POTS (Plain Old Telephone System) telephone jack at the location of the camera. The telephone jack couples the modem to a modem of an Internet service provider via the local loop of the telephone network. The Internet service provider is directly coupled to the Internet.

Although this system allows an inexpensive way of implementing remote access to digital cameras via the Internet, it is still not very flexible because it still needs a modem as well as an access point to the telephone network, such as the telephone jack.

Thus, it is an object of the invention to provide a method of the above mentioned type which is more flexible than the prior art, i.e. the utility device can be used freely without being dependent on modems and/or access points to the telephone network.

According to the invention, this is achieved in that the method comprises the steps of storing said digital information in the electronic utility device; converting said digital information to a text format in the electronic utility device; transferring said converted information from the electronic utility device to a portable telecommunications apparatus having an information access program for accessing the global information network; transferring said converted information from the portable telecommunications apparatus to the server connected to a global information network; and converting said digital information from the text format back to a binary format in the server.

Modern portable telecommunications apparatuses having an information access program for accessing a global information network, such as mobile WAP (Wireless Application Protocol) telephones having a built-in WAP browser, are becoming very popular and easily available. Therefore, when the information from the utility device is transferred to a telecommunications apparatus of that type in a format adapted therefor, i.e. a text format, a very flexible method, which can be used at virtually any location, is achieved.

When the method further comprises the steps of dividing said amount of digital information into a number of segments, and carrying out the transferring steps from the electronic utility device to the portable telecommunications apparatus and from the telecommunications apparatus to the server connected to a global information network for one segment at a time, a method is achieved which only requires a limited amount of memory in the telecommunications apparatus.

In an expedient embodiment of the invention, the global information network is the Internet, and the information access program is a WAP (Wireless Applications Protocol) client, and the information may then be transferred in the form of WAP methods (HTTP GET or POST).

The portable telecommunications apparatus may expediently be a mobile telephone.

As mentioned, the invention also relates to an electronic utility device adapted to obtain digital information in binary form related to a functionality of the electronic utility device; and comprising memory for storing the digital information and transmission means for transmitting the digital information to a server connected to a global information network. When the device further comprises means for converting the digital information to a text format, and when the transmission means are adapted to transfer the converted information to a portable telecommunications apparatus having an information access program for accessing the global information network, a very flexible device, which can be used at virtually any location, is achieved.

When the transmission means are adapted to divide the digital information into a number of segments and to transmit one segment at a time, a device is achieved which only requires a limited amount of memory in the telecommunications apparatus.

In an expedient embodiment the transmission means comprise a WAP server adapted to communicate with a WAP client in the portable telecommunications apparatus. The WAP server may then comprise WML scripts and be adapted to transmit the digital information in the form of WAP methods (HTTP GET or POST).

When the device is further adapted to receive digital information from the portable telecommunications apparatus and to use the received information for controlling the functionality of the device, the device can also be remotely controlled from the portable telecommunications apparatus.

Although the electronic utility device may be connected to the portable telecommunications apparatus in several different ways, an expedient embodiment is obtained, when the device further comprises connector means for connection with corresponding connector means on the portable telecommunications apparatus. In this way the two devices may be directly connected to each other and thus function as one combined unit. This is especially expedient, when the device is a digital camera adapted to transfer the digital information to a mobile telephone.

As mentioned, the invention also relates to a portable digital camera powered by a rechargeable battery and having memory for storing images captured by the camera as digital information in binary form. When the portable digital camera comprises an information provider program adapted for communication with an external portable telecommunications apparatus according to a protocol for accessing a global information network, wherein the communication comprises transmission of images stored in the memory to the external portable telecommunications apparatus, a very flexible camera, which can be used at virtually any location, is achieved.

In an expedient embodiment of the camera, the global information network is the Internet, and the information provider program comprises a WAP server. The WAP server may then comprise WML scripts and be adapted to transmit the digital information in the form of WML pages. The information network could also be an intranet.

When the camera is further adapted to receive digital information from the external portable telecommunications apparatus and to use the received information for controlling the functionality of the camera, the camera can also be remotely controlled from the portable telecommunications apparatus.

Although the camera may be connected to the portable telecommunications apparatus in several different ways, an expedient embodiment is obtained, when the camera comprises connector means for connection with corresponding connector means on the portable telecommunications apparatus for carrying out the communication with the portable telecommunications apparatus. In this way the two devices may be directly connected to each other and thus function as one combined unit. The camera may then comprise means allowing the rechargeable battery to be recharged from said portable telecommunications apparatus.

Alternatively, the portable digital camera may comprise a short-range radio interface, such as a Bluetooth interface, for carrying out the communication with the portable telecommunications apparatus.

In an expedient embodiment the portable digital camera further comprises means for storing images on a removable memory card. This provides an additional way of transferring images to other devices. The portable digital camera may also be adapted to be used as a separate unit for capturing and storing images. The images may then be transferred later when the camera is connected to e.g. a telephone.

When the portable digital camera further comprises means for transmitting images in a format allowing presentation on a display on the portable telecommunications apparatus, an easy way of displaying the images is achieved.

The portable telecommunications apparatus may expediently be a mobile telephone.

The invention will now be described more fully below with reference to the drawing, in which
figure 1 shows an example of how a digital camera may be connected to a mobile telephone,
figure 2 shows alternative ways of connecting a digital camera to a mobile telephone,
figure 3 shows how a picture may be divided into segments, and
figure 4 shows the process of transmitting images from a digital camera to a server.

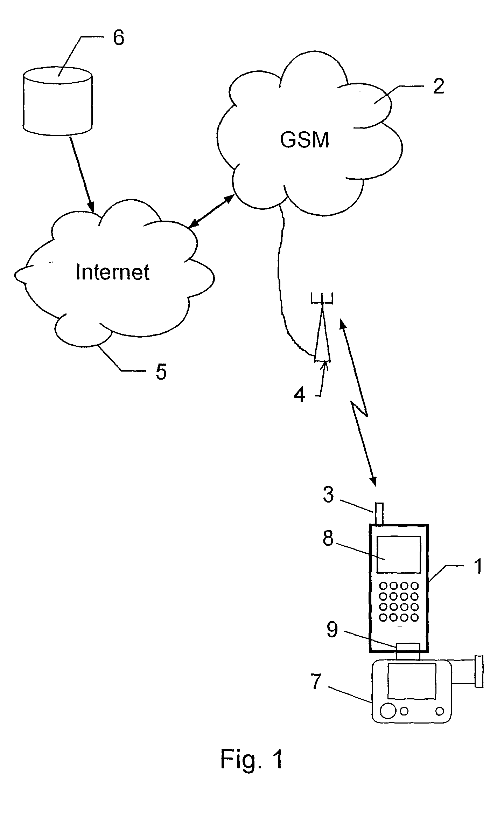

Figure 1 shows an example of how the invention may be implemented. A mobile telephone 1 may be connected in a conventional way to a mobile telecommunications network 2, e.g. a GSM network, through an antenna 3 and a base station 4. Via the GSM network 2 the mobile telephone may also be connected to the Internet 5 and a server 6 connected thereto. The mobile telephone 1 also comprises a system or accessories connector 9 by means of which it is connected to a digital camera 7.

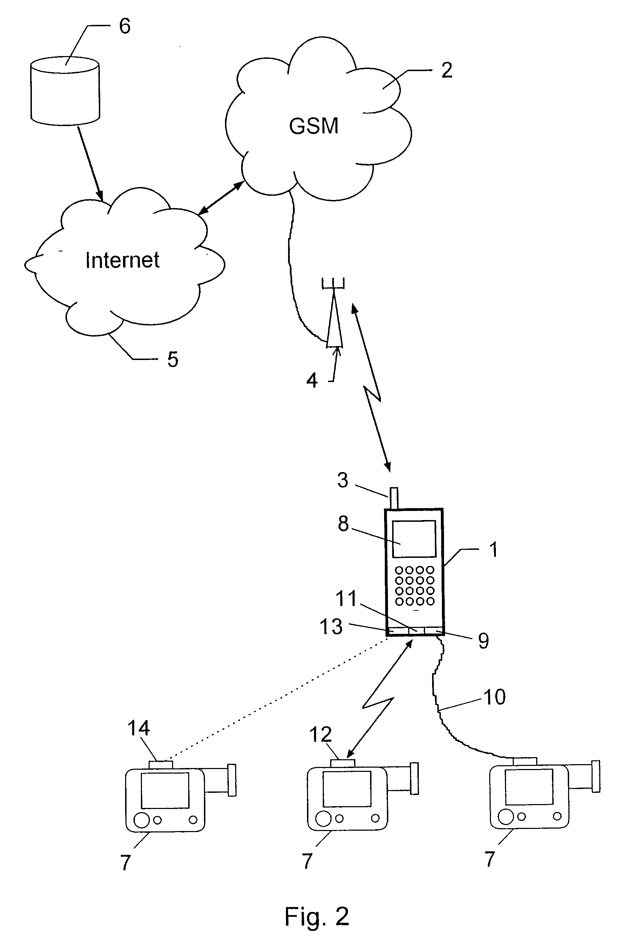

As shown in figure 2, the mobile telephone 1 may also be connected to the camera 7 in other ways. Figure 2 shows three different possibilities, although normally only one of them will be implemented at a time. Instead of being connected directly to the system or accessories connector 9, the digital camera may be connected to this connector through a cable 10. The mobile telephone 1 may also comprise a short-range radio link interface 11, such as a Bluetooth interface, establishing radio contact with a similar interface 12 on the camera. Alternatively, the mobile telephone 1 may comprise an infrared interface 13, such as an IrDA port, communicating with a similar interface 14 on the camera.

Although not shown, the digital camera 7 may also be adapted for insertion of a memory card.

The mobile telephone 1 has a controller or CPU which is coupled to a user interface (a display 8 and a keypad), a random access memory and a permanent memory in the form of a flash memory. The flash memory comprises an operating system and an information access program in the form of a WAP (Wireless Application Protocol) client. A part of the WAP client is a built-in WAP browser application, which when executed by the controller will form a graphical user interface (GUI) on the display 8 and allow the user to access a WAP server, which could be the server 6 connected to the Internet 5 or a WAP server embedded in the digital camera 7.

The WAP browser is adapted to receive encoded WML (Wireless Markup Language) pages from one of the WAP servers, and graphical information and/or text contained in the received WML pages may be presented on the display 8. The WAP browser of the mobile telephone may also transmit WML pages the other way to one of the WAP servers, and it is also possible to feed back information to the camera 7 by filling in WML forms and pushing the information back to the WAP server of the camera 7. In this way a user may use the mobile telephone 1 to operate the camera 7 and control the functionality thereof.

WML requests from the WAP browser may be directed to either the WAP server 6 connected to the Internet or to the digital camera 7. A special address scheme is used to distinguish camera communication from Internet communication. The usual "http://..." is used for Internet communication, while "wapdevice://..." is used for camera communication.

The digital camera 7 has a main controller or CPU. The main CPU is connected to an optical sensor with optics in the form of a lens package, which also includes an optical view-finder. The main CPU will handle the sensor and process the images which can be stored internally in a flash memory or on a memory card. Further, the main CPU controls a local user interface, such as buttons for capturing images, etc. The main CPU is also connected to a communications CPU which handles the communication with the telephone 1. The electronics of the camera is powered by a rechargeable battery cell. The battery cell can be recharged via a charging connector (not shown) or via the system connector 9 of the telephone 1 by "parasiting" the battery of the telephone. When the charging connector of the camera is used, it is also possible to recharge the battery of the telephone via the camera.

The software of the main CPU takes care of image processing. Before a picture can be captured a control loop for exposure will be run. The picture will then be captured, interpolated, colour corrected, sharpened and compressed. The compression scheme used may e.g. be according to the JPEG (Joint Photographic Expert Group) standard. Even after compression an image takes up quite an amount of memory (typically 10-50 kbytes), as will be described later. A small WBMP (Wireless Bitmap) version (typically 500 bytes) of the picture will also be generated for presentation on the display 8 of the mobile telephone 7. The software of the main CPU also has routines for reading and writing from/to the flash memory and the memory card if used.

The software of the communications CPU includes a WAP server. The WAP server comprises a virtual file system, which has the purpose of storing a plurality of WML pages and, optionally, a plurality of WML scripts in a structured and readable way. The WML pages and scripts themselves may be implemented on the main CPU. The WAP server also comprises a CGI (Common Gateway Interface) module for enabling user input from the WAP client of the mobile telephone 1 to the WAP server. The CGI module also comprises a set of routines that controls aspects or parameters of the camera, e.g. the picture resolution.

The digital camera 7 can be used in two modes, i.e. a stand-alone mode and a connected mode. In stand-alone mode the camera can be used as a normal point-and-click camera. It has an optical view-finder, a double action shooter button and a light emitting diode for indications. The user looks through the view-finder to find the target and presses the shooter button halfway down. The camera will then boot and perform light measurements. The light emitting diode will indicate when ready. The user can now press the button all the way down to take a picture. Repeated pictures can be taken without rebooting. The light emitting diode may also be used to indicate "battery low" or "camera full''. The fact that the camera does not boot before the button is pressed halfway down makes the camera a low power device which means that a high number of pictures can be taken before the battery needs to be recharged.

In the connected mode the camera 7 is connected to the mobile telephone 1 as described above. When the camera is connected to the telephone a WML start page is transmitted by the WAP server of the camera to the WAP client of the telephone, and the start page is presented on the display 8 of the phone. It is now possible to browse the pictures stored in the camera, to delete pictures and to send pictures from the WAP server of the camera to the WAP client/browser of the telephone. Images are sent by means of WAP protocols only. In principle, the pictures could then be stored in the telephone 1, and they, or some of them, could then be retransmitted from the telephone 1 to the server 6 connected to the Internet 5. Also this transmission would be by means of WAP protocols. However, as each picture typically occupies 10-50 kbytes of memory, this would require a very large memory in the telephone, which would be rather costly and take up too much space in the telephone.

Instead, if the pictures are only to be displayed on the display 8 of the telephone 1, they are transmitted in the WBMP version mentioned above, which only occupies about 500 bytes for each picture. If the user wants to send a picture (in the full format) from the camera 7 to the Internet server 6, the picture is treated differently. The solution is based on the fact that images are divided into segments and these segments are converted to text (base 64 coding) so that they can be sent more easily using WAP mechanisms. There are two possible ways to send the images, i.e. a HTTP POST based solution and a HTTP GET based solution. The following is common to both methods.

First, the user uses the WAP browser of the telephone 1 to select an image in the camera he wants to send. The WAP server of the camera then divides this image into a number of segments. A segment could typically be 800-2800 bytes so that a picture is divided into 5-15 segments. The image segments are then converted from binary to text using base 64 coding. The conversion could also take place before the segmentation.

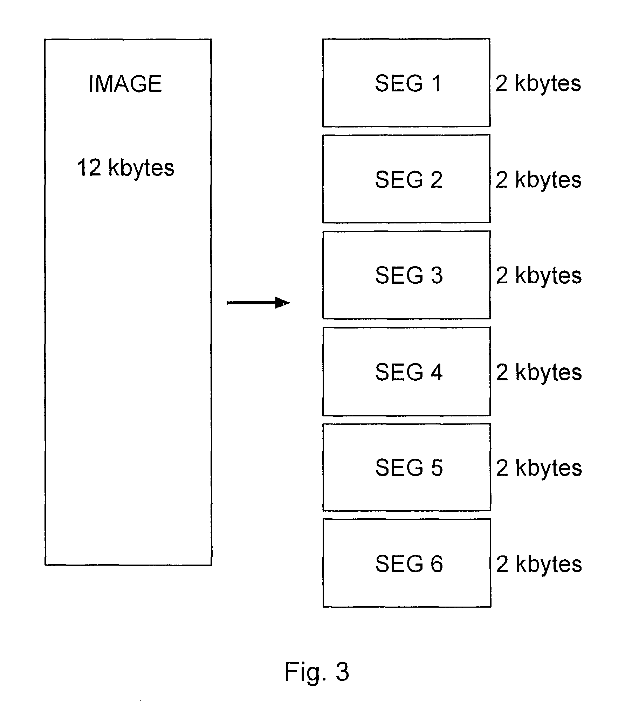

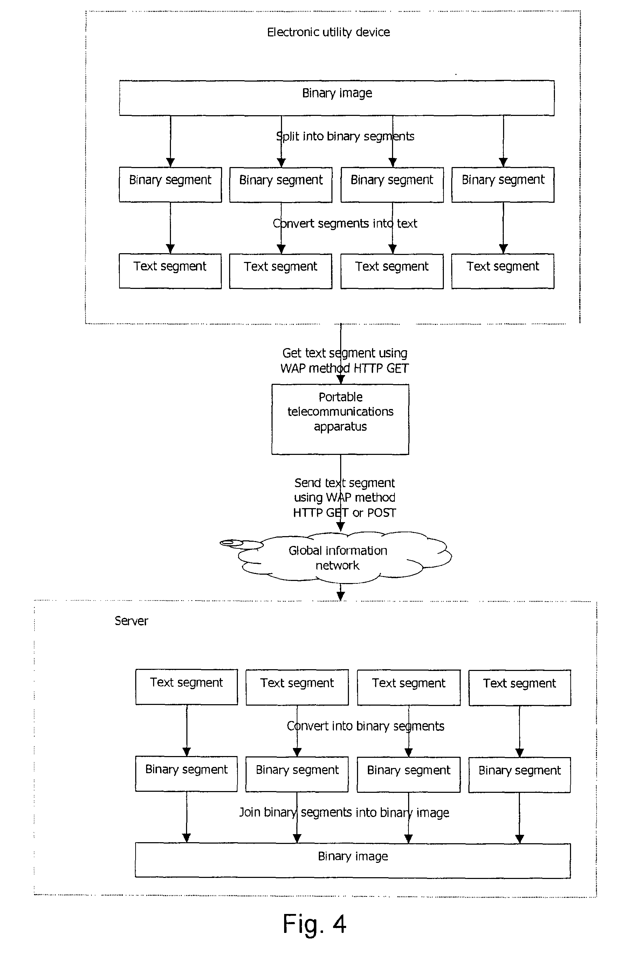

The WAP browser of the telephone 1 then reads one segment from the camera and subsequently sends this segment to the Internet server 6. Both of these processes are performed according to WAP protocols. The Internet server 6 stores the received segment in a temporary folder. If there are more segments, the next segment is read from the camera and sent to the Internet server. When all segments of a picture have been sent, the Internet server 6 decodes (base 64 decoding) the segments and puts them together into one binary file. Finally, the WAP browser of the telephone tells the user that the image is now sent to the Internet server. Figure 3 shows an example of how a picture of 12 kbytes is divided into six segments of 2 kbytes each. The process is shown in figure 4.

When the image is stored in the server 6 connected to the Internet 5 it will be accessible from any other device connected to the Internet. It is also possible to transmit, together with the image, a message from the telephone to the Internet server instructing the server to send e.g. an e-mail to a specified user with a link to the address at which the server has stored the image.

When the start page is presented on the display 8 of the telephone, the user can also select a maintenance menu which allows him to control the settings of the camera. The available settings are presented on a WML page submitted by the WAP server of the camera. The user may then select any setting and change its value. The changed value will be pushed back from the WAP client of the telephone to the WAP server of the camera as described earlier. The WAP server will recognize the changed value and implement the change.

When using the telephone as the way to communicate and manage images the concept is telephone centric, i.e. the camera can be considered as an accessory to the telephone, while the opposite is true for digital cameras on the market today.

Although a preferred embodiment of the present invention has been described and shown, the invention is not restricted to it, but may also be embodied in other ways within the scope of the subject-matter defined in the following claims. Specifically, the invention is applicable to other electronic utility devices than the described digital camera. Other interfaces may be used between the telephone and the camera and the Internet may be substituted by other information networks and the servers and browsers changed accordingly.

## Claims

1. A method of transmitting an amount of digital information in a binary format from an electronic utility device (7) to a server (6) connected to a global information network(5),**characterized in that** it comprises the steps of:
• storing said digital information in the electronic utility device (7),
• converting said digital information to a text format in the electronic utility device (7),
• transferring said converted information from the electronic utility device (7) to a portable telecommunications apparatus (1) having an information access program for accessing the global information network (5),
• transferring said converted information from the portable telecommunications apparatus (1) to the server (6) connected to the global information network (5), and
• converting said digital information from the text format back to a binary format in the server (6).

2. A method according to claim 1, **characterized in that** it further comprises the steps of:
• dividing said amount of digital information into a number of segments, and
• carrying out the transferring steps from the electronic utility device (7) to the portable telecommunications apparatus (1) and from the telecommunications apparatus (1) to the server (6) connected to the global information network (5) for one segment at a time.

3. A method according to claim 1 or 2, **characterized in that** the global information network (5) is the Internet, and the information access program is a WAP (Wireless Applications Protocol) client.

4. A method according to claim 3, **characterized in that** the information is transferred in the form of WAP methods (HTTP GET or POST).

5. A method according to any one of claims 1 to 4, **characterized in that** the portable telecommunications apparatus (1) is a mobile telephone.

6. An electronic utility device (7) adapted to obtain digital information in binary form related to a functionality of the electronic utility device (7), said device comprising:
• memory for storing said digital information, and
• transmission means for transmitting said digital information to a server (6) connected to a global information network (5),
**characterized in that**
• the device (7) further comprises means for converting said digital information to a text format, and
• that said transmission means are adapted to transfer said converted information to a portable telecommunications apparatus (1) having an information access program for accessing the global information network (5).

7. An electronic utility device according to claim 6, **characterized in that** said transmission means are adapted to divide said digital information into a number of segments and to transmit one segment at a time.

8. An electronic utility device according to claim 6 or 7, **characterized in that** the transmission means comprise a WAP server adapted to communicate with a WAP client in the portable telecommunications apparatus (1).

9. An electronic utility device according to claim 8, **characterized in that** the WAP server comprises WML scripts and is adapted to transmit said digital information in the form of WAP methods (HTTP GET or POST).

10. An electronic utility device according to any one of claims 6 to 9, **characterized in that** the device (7) is further adapted to receive digital information from the portable telecommunications apparatus (1) and to use the received information for controlling the functionality of the device (7).

11. An electronic utility device according to any one of claims 6 to 10, **characterized in that** the device (7) further comprises connector means for connection with corresponding connector means (9) on the portable telecommunications apparatus (1).

12. An electronic utility device according to any one of claims 6 to 11, **characterized in that** the device (7) is a digital camera adapted to transfer the digital information to a mobile telephone.

13. A portable digital camera (7) powered by a rechargeable battery and having memory for storing images captured by the camera as digital information in binary form,
**characterized in that** it comprises an information provider program adapted for communication with an external portable telecommunications apparatus (1) according to a protocol for accessing a global information network (5), said communication comprising transmission of images stored in the memory to said external portable telecommunications apparatus (1).

14. A portable digital camera according to claim 13, **characterized in that** the global information network (5) is the Internet, and the information provider program comprises a WAP server.

15. A portable digital camera according to claim 14, **characterized in that** the WAP server comprises WML scripts and is adapted to transmit said digital information in the form of WML pages.

16. A portable digital camera according to any one of claims 13 to 15, **characterized in that** it is further adapted to receive digital information from the external portable telecommunications apparatus (1) and to use the received information for controlling the functionality of the camera (7).

17. A portable digital camera according to any one of claims 13 to 16, **characterized in that** it comprises connector means for connection with corresponding connector means (9) on the portable telecommunications apparatus (1) for carrying out said communication with the portable telecommunications apparatus (1).

18. A portable digital camera according to claim 17, **characterized in that** it comprises means allowing the rechargeable battery to be recharged from said portable telecommunications apparatus (1).

19. A portable digital camera according to any one of claims 13 to 16, **characterized in that** it comprises a short-range radio interface (11, 12), such as a Bluetooth interface, for carrying out said communication with the portable telecommunications apparatus (1).

20. A portable digital camera according to any one of claims 13 to 19, **characterized in that** it further comprises means for storing images on a removable memory card.

21. A portable digital camera according to any one of claims 13 to 20, **characterized in that** it can be used as a separate unit for capturing and storing images.

22. A portable digital camera according to any one of claims 13 to 21, **characterized in that** it further comprises means for transmitting images in a format allowing presentation on a display (8) on the portable telecommunications apparatus (1).

23. A portable digital camera according to any one of claims 13 to 22, **characterized in that** said portable telecommunications apparatus (1) is a mobile telephone.
